# EUROPEAN PATENT SPECIFICATION

(11) **EP 2 134 155 B1**
(45) Date of publication and mention of the grant of the patent: **01.03.2017**
(21) Application number: 08737782.6
(22) Date of filing: 10.04.2008
(51) Int. Cl.: A01G 7/04, A01G 9/26, A01G 9/04

(54) **TRAY FOR GROWING ORGANIC MATERIAL AND A NURSERY ASSEMBLY**
SCHALE ZUR ZÜCHTUNG VON ORGANISCHEM MATERIAL UND BAUMSCHULEZUSAMMENBAU
PLATEAU POUR LA CROISSANCE D'UNE MATIÈRE ORGANIQUE ET ENSEMBLE PÉPINIÈRE

(30) Priority: 13.04.2007 EP 07106169
(43) Date of publication of application: 23.12.2009
(73) Proprietor: Philips Lighting Holding B.V., 5656 AE Eindhoven (NL)
(72) Inventor: VAN DER POEL, Lucas, L., D., NL-5656 AE Eindhoven (NL); RAAIJMAKERS, Antonius, H., M., NL-5656 AE Eindhoven (NL)
(74) Representative: Verweij, Petronella Daniëlle
(86) International application number: PCT/IB2008/051354
(87) International publication number: WO 2008/126022

(56) References cited:
- JP-A- 11 113 419
- US-A- 4 914 858
- US-A1- 2001 047 618
- US-A1- 2003 162 288

## Description

### FIELD OF THE INVENTION

The present invention relates to a tray for growing organic material. The invention further relates to a nursery assembly.

### BACKGROUND OF THE INVENTION

A nursery assembly is known from US 4,914,858. Said patent discloses a nursery assembly which is built up of a rack in which trays are accommodated. The trays are filled with a substrate into which seeds for germinating are inserted. Above each tray, a group of LEDs is situated. The heat emission from LEDs is minimal in comparison with that of light bulbs. This low radiation of heat enables the nurseryman to position the LEDs very close to the plant material.

US 6,680,200 discloses an assembly for promoting the growth of plant tissues that includes a plurality of trays each defining an array of wells, wherein each well contains a tissue sample. A plurality of LED arrays mounted on a circuit board above each tray provides the light for the tissue samples in said trays. Each of the LEDs is centered above a respective one of the wells.

JP 09-098665 discloses a plant cultivation apparatus capable of reducing electric power cost, such as illumination cost and refrigeration cost, while having an excellent growing performance and being useful for vegetable cultivation.

In the known assemblies, in a stable situation the air temperature and the soil temperature are equal. Furthermore, the soil is heated via the air.

### SUMMARY OF THE INVENTION

It is an object of the present invention to provide an improved tray for growing organic material.

This object is achieved by a tray for growing organic material comprising a plurality of LEDs, the tray having an upper side and a lower side, the upper side being arranged to carry a substrate for growing organic material and the lower side being arranged to radiate the light generated by the LEDs, the tray comprising a structure enabling the tray to radiate more heat, generated by the LEDs, to the upper side of the tray than to the lower side of the tray. Organic material could be any plant or seed material, but also a bacterial culture or cell culture.

The present invention is based on the recognition that the growth of plants can be improved by keeping the soil in which the roots are positioned above a certain temperature. For this reason black plastic is used in agriculture to cover the soil so as to enable a more efficient heating up of the soil below the plastic by the sunlight. This increases the average soil temperature, which improves the growth of plant material. According to the invention, the heat generated by the LEDs is not wasted. The tray according to the invention mainly transfers the generated heat to the substrate and not to the air. The tray functions as a floor heating device of the substrate. In this way the average temperature of the substrate could be higher than the air temperature. This enables the nurseryman to reduce further costs of heating or cooling the air, while the temperature of the substrate with the roots is kept above the desired substrate temperature. The embedding of LEDs in the tray enables the nurseryman to position more trays in an assembly. The floor heating function in combination with the function of lighting device is also advantageous in an embodiment of a substrate with a cell culture and bacterial culture, wherein the substrate is heated from below and not via the air above the culture.

In an embodiment of the invention the structure comprises a first part and a second part, a side of the first part forming the upper side and a side of the second part forming the lower side of the tray, wherein the LEDs are attached on the first part and the first part has a higher thermal conductivity than the second part. In this way the heat will be transferred mainly to the upper side of the tray. Furthermore, the higher the thermal conductivity the more the heat will be spread over a bigger surface of the upper side of the tray. This reduces the temperature variations in the substrate.

In an embodiment of the invention a gap separates the first part and the second part. The gap, which could be filled with air or another gas, functions as a thermal resistance between the first and the second part. In this way the heat generated by an LED will be transferred through the first part to the upper side of the tray.

In an embodiment of the invention the material of the first part is at least one of the materials: metal, glass, Plexiglass, or plastic. In a further embodiment of the invention the material of the second part is at least one of the transparent materials: glass, Plexiglass, or plastic. These features enable to provide a tray that can easily be cleaned after each growth period and that protects the LEDs against humidity and dust.

In an embodiment of the invention the surface of the first part facing the second part is reflective. This feature increases the lighting efficiency of the tray.

In an embodiment of the invention the structure comprises one or more heat pipes, and the LEDs are thermally coupled to the one or more heat pipes. This feature enables to transfer quickly the heat from the LED to the lowest temperature of the heat pipe. In this way the tray evenly heats the substrate. This improves the growing of roots.

In an embodiment of the invention the heat pipes are horizontally positioned. This feature enables to embed the heat pipes in a plate. By mounting the LEDs near to a heat pipe, the heat generated by the LED will be spread more evenly over the contact area of the tray and the substrate. Furthermore, this feature enables to use one heat pipe for a tray. The heat pipe could meander in a sinuous, spiral, or circular course over the tray. In another embodiment the heat pipe could extend horizontally from one side to another side of the tray.

In an embodiment of the invention the heat pipes are positioned above a bottom layer, which bottom layer comprises areas for allowing passage of the light emitted by the LEDs. This embodiment enables to improve the efficiency of transfer of heat from the LED to the substrate. By positioning the heat pipe above a bottom layer, the contact area of the heat pipe and the soil is increased. The LEDs have to be attached to the heat pipe to enable the heat pipe to transfer efficiently the generated heat from an LED to the soil. The bottom layer comprises transparent areas for allowing passage of the light generated by the LEDs to the plant material positioned below the tray.

In an embodiment of the invention the heat pipes are vertically positioned. This feature reduces the temperature difference between the top of the substrate and the bottom of the substrate. A smaller temperature variation in the substrate results in a more uniform growth of roots in the substrate, irrespective of the depth of the substrate.

A further aspect of the invention relates to a nursery assembly comprising a plurality of trays according to the claims, the trays being positioned above each other.

Yet another aspect of the invention relates to a method of growing organic material, which method comprises the steps of:
- providing a nursery area containing organic material in a substrate with trays according to the invention comprising a plurality of LEDs; and
- energizing the LEDs so that they emit light onto said organic material in said substrate and heat up the substrate via a structure of said trays. In this way the heat generated by the LEDs is not wasted by heating the air, but is used to directly heat up the substrate. The invention provides a floor heating system for a substrate. By means of the invention the temperature of the substrate can be higher than the air temperature. This means that the air temperature can be reduced, while the optimal substrate temperature for the growing of roots is maintained. In this situation an energy saving can be obtained.

### BRIEF DESCRIPTION OF THE DRAWINGS

The present invention will be described in detail, by way of example and with reference to the accompanying drawings, in which:
Fig. 1 shows a perspective view of a nursery assembly provided with trays according to the invention;
Fig. 2 shows schematically a cross section of a first embodiment of the invention;
Figs. 3a and 3b show schematically cross sections of a second embodiment of the invention;
Figs. 4a and 4b show schematically cross sections of a third embodiment of the invention; and,
Figs. 5a and 5b show schematically cross sections of a fourth embodiment of the invention.

### DETAILED DESCRIPTION OF THE EMBODIMENTS

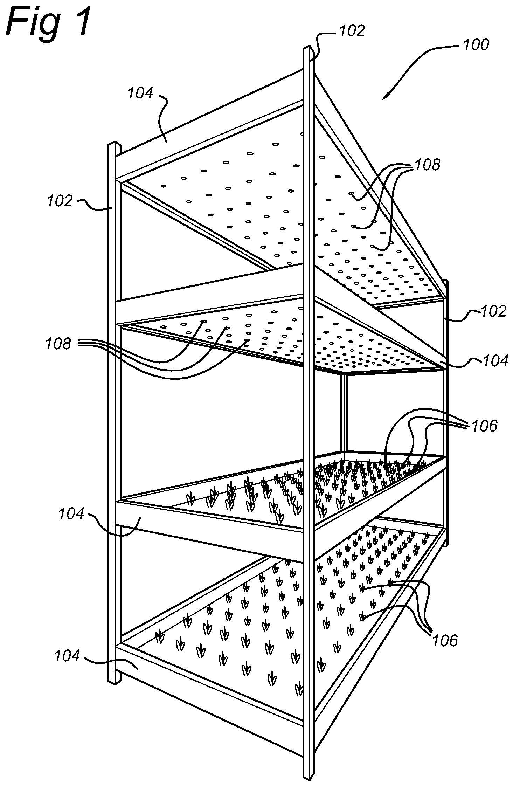

Figure 1 shows a perspective view of a nursery assembly 100 built up of a rack 102 in which trays 104, 104' according to the invention are accommodated. The trays 104, 104' are detachably positioned in the rack 102. The trays 104, 104' in Figure 1 are filled with a substrate. In the substrate, seeds for germinating could be inserted or cultivated plants 106 could grow. Examples of a substrate are soil, potting compost, mineral wool or rock wool. The trays 104, 104' comprise a plurality of Light Emitting Diodes (LEDs) 108 at the bottom of a tray 104, 104'. The LEDs embedded in a tray 104'radiate light upon the plant material in the tray 104 positioned below said tray 104'. LEDs have the advantage that the heat generated by the LED is not radiated in the form of Infra Red light (IR) in the beam. This has the advantage that the light source can be positioned close to the plant material. In Figure 1 can be seen that the LEDs are uniformly distributed over the bottom of the tray 104'. This enables to provide uniform lighting conditions for the plant material 106. According to the invention, the heat generated by the LEDs is mainly transferred to the substrate to keep the roots of the plants above a certain temperature or at an optimal temperature for growing plants or germinating seeds. The structure of the tray is such that it functions as a floor-heating device and a lighting device. As the heat from the LEDs heats up mainly the substrate material and not the air between the trays 104, 104', the air temperature can be reduced. This can lead to a reduction of the energy which is normally used to heat up the air in the space where plants grow. This will reduce the costs for producing plant material.

It should be noted that the LEDs can be any "light-emitting element" that emits radiation in any region or combination of regions of the electromagnetic spectrum, for example, the visible region, the infrared and/or ultraviolet region, when activated by applying a potential difference across it or passing a current through it, for example. Therefore, the LED can have monochromatic, quasi-monochromatic, polychromatic or broadband spectral emission characteristics. Also a combination of LEDs with different wavelengths can be used in a single tray. One type with a wavelength optimized for the growth and another type with a wavelength optimal for e.g. the blooming stage of the plants. Examples of light-emitting elements include semiconductor, organic, or polymer/polymeric light emitting diodes, optically pumped phosphor coated light emitting diodes, optically pumped nano-crystal light-emitting diodes or any other similar light-emitting devices, as will be readily understood by a person skilled in the art.

Furthermore, it should be noted that the rack and trays are provided with supply wires. A person skilled in the art knows how to install the supply wires and corresponding connections in the rack 102 and the trays 104, 104'. Therefore, this subject matter is not discussed in further detail.

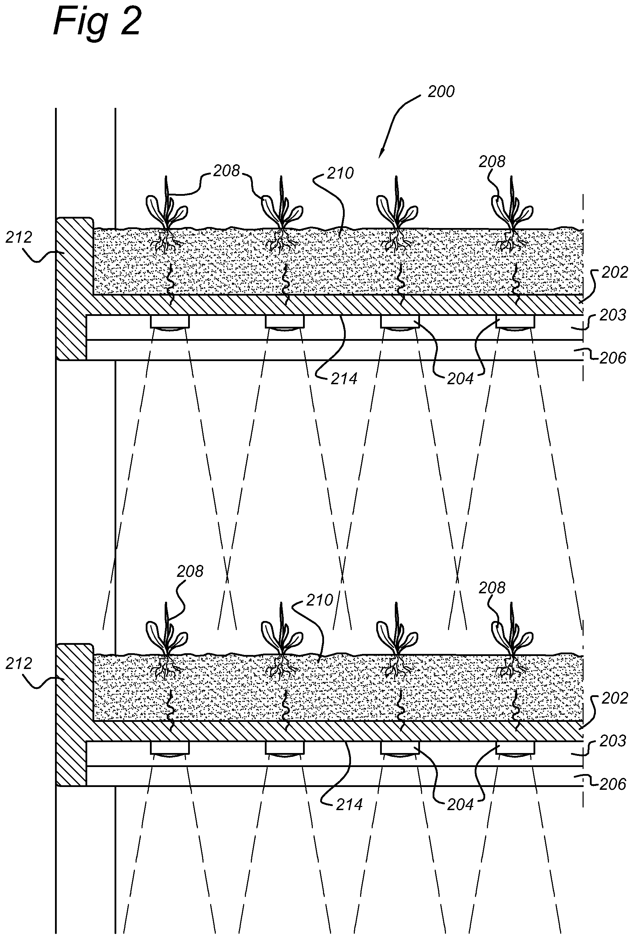

Figure 2 shows schematically a cross section of a first embodiment of a tray 200 according to the invention. The tray comprises a top layer 202 and a bottom layer 206. LEDs 204 are embedded between the top layer 202 and the bottom layer 206. Preferably, the LEDs 204 are attached to the top layer 202. This provides a good thermal coupling between a LED 204 and the top layer 202. The top layer 202 could be made of glass, metal, Plexiglass, plastic or any other material suitable for providing a tray for growing plants and conducting heat. A suitable metal is for example aluminum, which is a light material with a good thermal conductivity. In a preferred embodiment, the top layer 202 comprises a light-reflective surface 214. The light-reflective surface 214 increases the amount of light radiated via the bottom of the tray. The efficiency of the system can be even further improved by applying a white plastic foil around the plant (organic material). This improves the lighting efficiency of the tray 200. The bottom layer 206 is made of a transparent material such as glass, Plexiglass or plastic. Also a diffuser material could be used resulting in a homogenous emitting surface. The top layer 202 and bottom layer 206 are spaced from each other by means of a gap 203. The gap 203 is filled with air or any other suitable gas or liquid that forms a thermal insulation between the top layer 202 and the bottom layer 206. In this way, the heat dissipated by the LED 204 towards the top layer 202 will not easily be transferred to the bottom layer, but rather be passed to the substrate 210 in which plant material 208 is growing. If the top layer 202 is made of a good heat conductive material, the top layer 202 will pass heat, evenly distributed over the contact area 216 with the substrate, to the substrate 210. In this way, more heat will be radiated to the substrate 210 above the tray 200 than to the air below the tray 200. The technology for manufacturing Metal Core Printed Circuit Boards could be used for mounting the LEDs on a layer of metal.

Another advantage of the thermal conductivity of the top layer is that the average operating temperature of the LEDs will decrease. A reduction of the operating temperature will increase the lighting efficiency of the LEDs. Furthermore, reduction of the average operating temperature will increase the lifetime of an LED.

The space between the LED 204 and the bottom layer 206 could be minimal. The heat generated by the LEDs is dissipated at the rear side of the LEDs and transferred to the top layer 202. The space between the LEDs 204, which now forms the gap 203, forms a thermal resistance between the top layer 202 and the bottom layer 206. The bottom layer 206 could comprise collimators (not shown) provided in the beams of the LEDs. A collimator provides a light beam of a LED with the desired optical characteristics, such as beam angle and beam axis.

In Figure 2, the tray comprises a rim 212, to ensure that the substrate or water provided to the substrate will not spill from the tray 200. The flat surface of the tray as well as the top side and bottom side provide the tray with easy cleaning characteristics. Furthermore, the two layers 202, 206 provide a waterproof environment for the embedded LEDs 204 and corresponding electronics. Furthermore, the top and bottom surface of the tray comprises no electrical parts.

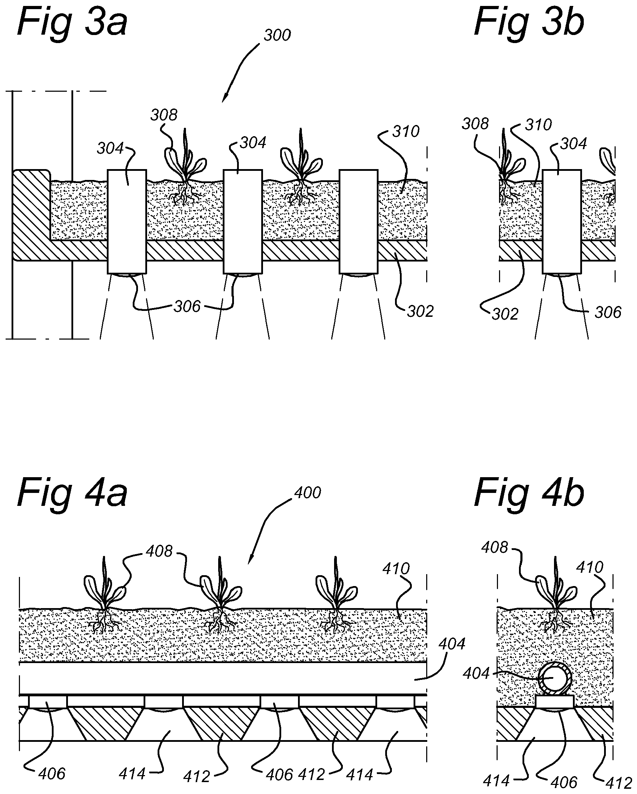

Figures 3A and 3B show schematically cross sections of a second embodiment of a tray according to the invention. Figure 3B shows a cross section, which is perpendicular to the cross section in Figure 3A. The tray 300 comprises a layer 302 provided with heat pipes 304. An LED 306 is attached to the bottom side of a heat pipe 304. It should be noted that more than one LED could be mounted to the bottom side of the heat pipe 306.

A heat pipe is a simple device that can quickly transfer heat from one point to another. They are often referred to as the "superconductors" of heat as they possess an extraordinary heat transfer capability with almost no heat loss. The principle of a heat pipe is well known and is described in, among other documents, "Experimental investigations of micro heat pipes fabricated in silicon wafers", Peterson G.P. et al, Journal of Heat Transfer, vol. 115. pp 751-756, 1993. In short, a heat pipe is a sealed elongated channel of small cross sectional dimensions. A liquid is applied inside the heat pipe that is otherwise evacuated. A first end of the elongated heat pipe is used as the heat-receiving end at which heat is absorbed and the liquid evaporated. A second end of the elongated heat pipe is used as a condenser and is connected to a heat sink, in our application the substrate. At the second end, the vapor is condensed to recuperate the liquid. The rate of vapor travel from the first end to the second end is governed by the difference in vapor pressure between the two ends. With a proper design of the size and shape of the channel, the liquid formed at the second end of the heat pipe is transported by capillary force to the first end where it is evaporated again. Typically, the heat pipes are provided with angular sections or capillary structures to enhance the capillary force. The capillary structures could comprise at least one of: grooves, a screen mesh, a fine fiber or a sintered powder at the inner side of the heat pipe. The liquid thus works as an efficient circulating heat-transporting medium. The heat pipe principle provides an efficient cooling device without the need for any pump or similar device, since the cooling liquid is transported by means of capillary force only. Suitable cooling liquids include methanol, liquid ammonia and water. The cross sectional dimensions and the detailed design of heat pipes are optimized for the application in question in order to provide a suitable capillary pressure. WO2006/114726A2 and WO2006/105638 disclose the application of cooling a LED with a heat pipe.

The heat pipes 304 in the second embodiment are vertically positioned. A heat pipe will normally conduct the heat to the coldest place of the external surface of the heat pipe. Consequently, the heat radiated by the heat pipe will be evenly distributed over the contact area with the substrate. The roots of the plant material grow between the vertically positioned heat pipes. Therefore, the roots will be heated from aside. In this embodiment, the temperature of the substrate could vary in the horizontal direction and will minimally vary in the vertical direction. This means that the growing conditions of the roots with respect to the depth of a root in the substrate are more or less similar.

In the embodiment of Figure 3, the heat pipes 304 pass through the substrate 310 from the bottom to the top layer of the substrate 310. The heat pipes 304 provide means for anchoring the substrate 310 to the tray 300. If the substrate is made of e.g. Rock wool, the Rock wool could comprise preformed holes to receive the heat pipes 304. In another embodiment, the top of the heat pipes is covered with the substrate.

The envelope of the heat pipes may have, inter alia, a cylindrical, rectangular, or other custom shape, based on the design. For example, the upper surface of the tray could form an array of wells, each of the wells being arranged to contain a substrate for growing one or more nursery plants. In this embodiment, the heat pipes could be embedded just below the surface of a sidewall of each well.

Figures 4a and 4b show schematically cross-sections of a third embodiment of a tray according to the invention. Figure 4b is a cross section perpendicular to the cross section of Figure 4a. In this embodiment, a heat pipe 404 extends horizontally over a bottom layer 402 of the tray 400. LEDs 406 are attached to the heat pipe 404. In an embodiment, the heat pipes could extend parallel to one another from one side of the tray to the other side of the tray, or one heat pipe could meander across the whole surface of the tray 400. The bottom layer 402 comprises transparent areas 414 to pass the light generated by the LEDs 406 to the plant material positioned below the tray 400. The other areas 412 could be of transparent or non-transparent material. In an embodiment the transparent areas 414 comprise collimators which shape the light beams of the LEDs. Preferably, the LEDs are placed in a regular pattern across the tray, to provide the tray with uniform lighting conditions for the plant material situated below the tray.

In this embodiment, the heat generated by the LEDs 406 is evenly radiated across the outer surface of the heat pipe 404. The substrate 410 wherein the plant material grows is heated up from below.

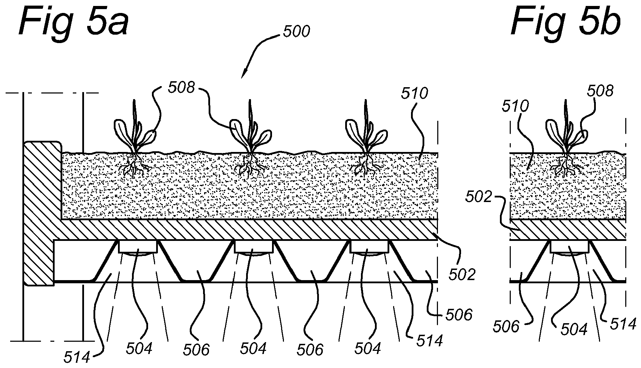

Figs. 5A and 5B show schematically cross-sections of a fourth embodiment of a tray according to the invention. Figure 5B is a cross section perpendicular to the cross section of Figure 5A. The tray comprises a top layer 502 of thermally conductive material. LEDs 504 are attached to the bottom side of the top layer 502. The heat generated by the LEDs 504 will be distributed across the top layer 502. Furthermore, a thermal isolation layer 506 is attached to the bottom side of the top layer 502. To pass the light emitted by the LEDs to the plant material below the tray 500, the isolation layer 506 comprises holes 514 at the position of the LEDs 504. By means of this structure, the heat generated by the LEDs is mainly radiated via the upper surface of the tray to the substrate 510 to heat up the substrate 510. The more thermally conductive the material of the top layer 502, the more the heat is spread over the upper surface of the tray. In an embodiment, the holes 514 comprise collimators which shape the light beams of the LEDs.

Although the invention is described by means of preferred embodiments thereof, it is to be understood that these are non-limitative examples. Thus, various modifications are conceivable to those skilled in the art, without departing from the scope of the invention, as defined by the claims. For example the heat pipes could be embedded in the top layer 502 of the fourth embodiment to improve the thermal conductivity of the top layer 502. Furthermore, the contact area of the top layer with the substrate could be increased by for example a wavelike surface instead of a flat surface or by providing cooling structures, for example ribs, to the top layer which extend the upper surface. Furthermore, the embodiments given above show trays with plant material. The invention could also be advantageously used in for example a laboratory for cultivating cell cultures or bacterial cultures.

## Claims

1. Tray (200) for growing organic material comprising a plurality of LEDs (204), the tray having an upper side (202) and a lower side (206), the upper side being arranged to carry a substrate (210) for growing organic material and the lower side being arranged to radiate the light generated by the LEDs, wherein the tray comprises a structure which enables the tray to radiate more heat, generated by the LEDs, at the upper side than at the lower side of the tray.

2. Tray as claimed in claim 1, wherein the structure comprises a first part and a second part, a side of the first part forming the upper side and a side of the second part forming the lower side of the tray, the LEDs being attached on the first part, which has a higher thermal conductivity than the second part.

3. Tray as claimed in claim 2, wherein a gap separates the first part and the second part.

4. Tray as claimed in claim 2, wherein the material of the first part is at least one of the materials: metal, glass, Plexiglass or plastic.

5. Tray as claimed in claim 2, wherein the material of the second part is at least one of the transparent or diffuser materials: glass, Plexiglass or plastic.

6. Tray as claim in claim 3, wherein the first part at the side of the gap has a reflective surface.

7. Tray as claimed in any one of the claims 1 to 6, wherein the structure comprises one or more heat pipes to which the LEDs are thermally coupled.

8. Tray as claimed in claim 7, wherein the heat pipes are horizontally positioned.

9. Tray as claimed in claim 8, wherein the heat pipes are positioned above a bottom layer, which bottom layer comprises areas for allowing passage of the light emitted by the LEDs.

10. Tray as claimed in claim 7, wherein the heat pipes are vertically positioned.

11. A nursery assembly (100) comprising a plurality of trays (200) as claimed in claims 1 to 10, wherein the trays are positioned above each other.

12. Method of growing organic material, which comprises the steps of:
- providing a nursery area containing organic material in a substrate with trays according to any one of the claims 1 to 10 comprising a plurality of LEDs, and
- energizing the LEDs so that they emit light onto said organic material in said substrate and heat up the substrate via a structure of said trays.

## Patentansprüche

1. Schale (200) zur Züchtung von organischem Material, eine Vielzahl von LED (204) umfassend, wobei die Schale eine Oberseite (202) und eine Unterseite (206) aufweist, wobei die Oberseite ausgeführt ist, um ein Substrat (210) zur Züchtung von organischem Material zu tragen, und die Unterseite ausgeführt ist, um das Licht auszustrahlen, das durch die LED erzeugt wird, wobei die Schale eine Struktur umfasst, die es der Schale ermöglicht, an der Oberseite mehr Wärme auszustrahlen, die von den LED erzeugt wird, als an der Unterseite der Schale.

2. Schale nach Anspruch 1, wobei die Struktur einen ersten Teil und einen zweiten Teil umfasst, wobei eine Seite des ersten Teils die Oberseite bildet und eine Seite des zweiten Teils die Unterseite der Schale bildet, wobei die LED am ersten Teil angebracht sind, der eine höhere Wärmeleitfähigkeit aufweist, als der zweite Teil.

3. Schale nach Anspruch 2, wobei der erste Teil und der zweite Teil durch einen Spalt voneinander getrennt sind.

4. Schale nach Anspruch 2, wobei das Material des ersten Teils zumindest eines aus den folgenden Materialien ist: Metall, Glas, Plexiglas oder Kunststoff.

5. Schale nach Anspruch 2, wobei das Material des zweiten Teils zumindest eines der transparenten oder diffundierenden Materialien ist: Glas, Plexiglas oder Kunststoff.

6. Schale nach Anspruch 3, wobei der erste Teil auf der Seite des Spalts eine reflektierende Oberfläche aufweist.

7. Schale nach irgendeinem der Ansprüche 1 bis 6, wobei die Struktur eine oder mehrere Wärmerohre umfasst, mit denen die LED thermisch verbunden sind.

8. Schale nach Anspruch 7, wobei die Wärmerohre horizontal positioniert sind.

9. Schale nach Anspruch 8, wobei die Wärmerohre über einer unteren Schicht positioniert sind, wobei die untere Schicht Bereiche umfasst, die das Licht, das von den LED ausgesendet wird, durchscheinen lassen.

10. Schale nach Anspruch 7, wobei die Wärmerohre vertikal positioniert sind.

11. Baumschulzusammensetzung (100), eine Vielzahl von Schalen (200) nach den Ansprüchen 1 bis 10 umfassend, wobei die Schalen übereinander positioniert sind.

12. Verfahren zur Züchtung von organischem Material, das die folgenden Schritte umfasst:
- Bereitstellen eines Baumschulbereichs, der organisches Material in einem Substrat mit Schalen nach irgendeinem der Ansprüche 1 bis 10 enthält, eine Vielzahl von LED umfassend, und
- Stromversorgung der LED, sodass sie Licht auf das besagte organische Material im besagten Substrat aussenden und das Substrat über eine Struktur der besagten Schalen erwärmen.

## Revendications

1. Plateau (200) pour la croissance d'une matière organique comprenant une pluralité de LED (204), le plateau comportant un côté supérieur (202) et un côté inférieur (206), le côté supérieur étant agencé pour porter un substrat (210) pour la croissance d'une matière organique et le côté inférieur étant agencé pour faire rayonner la lumière générée par les LED, dans lequel le plateau comprend une structure permettant au plateau de faire rayonner plus de chaleur, générée par les LED, au côté supérieur qu'au côté inférieur du plateau.

2. Plateau selon la revendication 1, dans lequel la structure comprend une première partie et une deuxième partie, un côté de la première partie formant le côté supérieur et un côté de la deuxième partie formant le côté inférieur du plateau, les LED étant attachées sur la première partie, qui a une conductivité thermique supérieure à celle de la deuxième partie.

3. Plateau selon la revendication 2, dans lequel un espacement sépare la première partie et la deuxième partie.

4. Plateau selon la revendication 2, dans lequel la matière de la première partie est au moins l'une des matières suivantes : métal, verre, plexiglas ou plastique.

5. Plateau selon la revendication 2, dans lequel la matière de la deuxième partie est au moins l'une des matières transparentes ou diffusantes suivantes : verre, plexiglas ou plastique.

6. Plateau selon la revendication 3, dans lequel la première partie au côté de l'espacement a une surface réfléchissante.

7. Plateau selon l'une quelconque des revendication 1 à 6, dans lequel la structure comprend un ou plusieurs tuyaux de chaleur auxquels les LED sont thermiquement couplées.

8. Plateau selon la revendication 7, dans lequel les tuyaux de chaleur sont positionnés horizontalement.

9. Plateau selon la revendication 8, dans lequel les tuyaux de chaleur sont positionnés au-dessus d'une couche inférieure, la couche inférieure comprenant des zones pour permettre un passage de la lumière émise par les LED.

10. Plateau selon la revendication 7, dans lequel les tuyaux de chaleur sont positionnés verticalement.

11. Ensemble pépinière (100) comprenant une pluralité de plateaux (200) selon l'une quelconque des revendication 1 à 10, dans lequel les plateaux sont positionnés l'un au-dessus de l'autre.

12. Procédé de croissance d'une matière organique, comprenant les étapes de :
- la fourniture d'une zone pépinière contenant une matière organique dans un substrat avec des plateaux selon l'une quelconque des revendication 1 à 10, comprenant une pluralité de LED, et
- la mise sous tension des LED de sorte qu'elles émettent une lumière sur ladite matière organique dans ledit substrat et chauffent le substrat par l'intermédiaire d'une structure desdits plateaux.
